# EUROPÄISCHE PATENTSCHRIFT

(11) **EP 0 555 294 B1**
(45) Veröffentlichungstag und Bekanntmachung des Hinweises auf die Patenterteilung: **03.08.1994**
(21) Anmeldenummer: 91918818.5
(22) Anmeldetag: 25.10.1991
(51) Int. Cl.: F28B 11/00, G01K 17/12

(54) **BETRIEBSÜBERWACHUNG EINES ROHRE AUFWEISENDEN KONDENSATORS MIT MESSUNGEN AN AUSGEWÄHLTEN ROHREN**
OPERATIONAL MONITORING OF A CONDENSER WITH TUBES WITH MEASUREMENTS AT SELECTED TUBES
CONTROLE DU FONCTIONNEMENT D'UN CONDENSEUR POURVU DE TUBES PAR DES MESURES EFFECTUEES SUR DES TUBES SELECTIONNES

(30) Priorität: 06.11.1990 DE 4035242
(43) Veröffentlichungstag der Anmeldung: 18.08.1993
(73) Patentinhaber: SIEMENS AKTIENGESELLSCHAFT, 80333 München (DE)
(72) Erfinder: DROSDZIOK, Armin, D-4300 Essen (DE); ZÖRNER, Walter, D-8523 Baiersdorf-Igelsdorf (DE)
(86) Internationale Anmeldenummer: DE9100833
(87) Internationale Veröffentlichungsnummer: WO9208089

(56) Entgegenhaltungen:
- EP-A- 0 155 826
- EP-A- 0 342 767
- DE-A- 3 125 546
- US-A- 4 488 516
- Patent Abstracts of Japan, vol. 11, no. 98 (M-575) 27. März 1987 & JP, A, 61 246 590 (TAPUROGE JAPAN KK) 1. November 1986
- Patent Abstracts of Japan, vol. 7, no. 265 (M-258) (1410) 25. November 1983 & JP, A, 58 145 895 (SUMITOMO KINZOKU KOGYO KK) 31. August 1983
- Patent Abstracts of Japan, vol. 8, no. 57 (M-283) (1494) 15. März 1984 & JP, A, 58 208 587 (MITSUBISHI DENKI KK) 5. Dezember 1983
- Patent Abstracts of Japan, vol. 6, no. 93 (M-133) 29. Mai 1982 & JP, A, 57 028 940 (HITACHI LTD) 16. Februar 1982
- Patent Abstracts of Japan, vol. 12, no. 98 (M-680) (2945) 31. März 1988 & JP, A, 62 233 683 (SUMITOMO METAL IND LTD) 14. Oktober 1987
- Patent Abstracts of Japan, vol. 7, no. 12 (M-186) (1157) 19. Januar 1983 & JP, A, 57 169 600 (HITACHI SEISAKUSHO KK) 19. Oktober 1982

## Beschreibung

Die Erfindung betrifft ein Verfahren zur Betriebsüberwachung eines Kondensators gemäß dem ersten Teil des Patentanspruchs 1, sowie eine Vorrichtung zur Durchführung eines derartigen Verfahrens. Ein derartiges Verfahren ist zum Beispiel, aus der JP-A-61 246 590 bekannt.

Die Zielsetzung der Entwicklung von Kraftwerksanlagen orientiert sich stets an den wirtschaftlichen Aspekten der Stromerzeugung. Nach einer Phase der Steigerung der Anlagengrößen, die besonders bei Kernkraftwerken wegen ihrer hohen Investitionskosten ausgeprägt war, führten die hohen Brennstoffkosten fossil befeuerter Kraftwerke sowie die Investitionen für Maßnahmen des Umweltschutzes einerseits zur Entwicklung von Anlagen mit hoher Energieausnutzung durch Anwendung hoher Frischdampfzustände, sowie andererseits zu komplexen Gestaltungen der Anlagen, ggf. mit Möglichkeiten zur Auskopplung von Wärme für Heizzwecke oder dergleichen.

Unter diesen Aspekten ist beim Betrieb eines Kraftwerks stets das jeweilige thermodynamische Optimum im Interesse einer möglichst wirtschaftlichen Stromerzeugung anzustreben. Auch sind Gesichtspunkte wie Wartung und Instandhaltung Einflußgrößen von beachtlicher wirtschaftlicher Bedeutung. Jede Möglichkeit einer weiteren Erhöhung der Arbeitsausnutzung der Anlagen bedingt eine Verbesserung der wirtschaftlichen Effizienz. Zur größtmöglichen Steigerung der Arbeitsausnutzung einer Kraftwerksanlage bietet sich der Einsatz von Diagnosesystemen an, mit denen ein umfassender Überblick über den jeweiligen Anlagenzustand erhalten werden kann, wie er zur Steuerung der Anlage im Hinblick auf die wirtschaftlich günstigste Betriebsweise erforderlich ist. Auch können aufkommende Störungen durch entsprechende Diagnose frühzeitig erkannt und durch entsprechende Abhilfemaßnahmen vermieden, zumindest aber abgemildert werden. Die Erfindung bezieht sich auf die Diagnose eines Kondensators, d. h. die Erfassung umfangreicher Meßwerte und Informationen während des Betriebs des Kondensators zur Bildung einer Gesamtaussage über den Betriebszustand, um zu Störungen führende Betriebsbedingungen frühzeitig zu erkennen sowie ggf. gezielte Gegenmaßnahmen einzuleiten.

In der EP 0 030 459 Al und der DE 37 05 240 Al werden bereits Wege zur Überwachung eines Kondensators in einer Dampfkraftwerksanlage gewiesen, die in erster Linie abgestellt sind auf die Überwachung der Rohre in dem Kondensator, die von einem Kühlmittel (in der Regel Wasser, das einem Fluß o. dgl. entnommen wird) durchströmt und von dem zu kondensierenden Dampf umströmt werden. Eine vorherige intensive Reinigung des als Kühlmittel verwendeten Wassers scheidet in der Regel aus wirtschaftlichen Gründen aus; daher gibt es zumeist Verschmutzungen, meistens schleimige Beläge, in den Rohren. Diesen Verschmutzungen wird üblicherweise dadurch begegnet, daß dem Kühlwasser Reinigungskörper zugesetzt werden, die die Innenseiten der Rohre mechanisch reinigen. Gemäß der EP 0 030 459 Al wird diese Reinigung dann veranlaßt, wenn die mittels des Diagnosesystems festgestellte Wärmebilanz des Kondensators Verschlechterungen in einem Maß aufweist, das gewisse festgelegte Vorgaben überschreitet. Zur Erstellung der Wärmebilanz wird an mehreren Rohren der durch diese hindurchtretende Wärmefluß mittels an den Außenseiten der Rohre angebrachter Wärmeflußsensoren gemessen. In der DE 37 05 240 Al wird angeregt, Messungen an stichprobenartig ausgewählten und weitgehend gleichmäßig über den Kondensator verteilten Rohren zur Bestimmung der Wärmedurchgangskoeffizienten dieser Rohre vorzunehmen, wozu jedes der ausgewählten Rohre an seinem Austrittsende mit einem Temperatursensor sowie einer Verschlußvorrichtung zu versehen ist. Wird das ausgewählte Rohr im normalen Betrieb von Kühlwasser durchflossen, so mißt der Temperatursensor die Austrittstemperatur des Kühlwassers. Wird das ausgewählte Rohr mittels der Verschlußvorrichtung verschlossen, so nimmt das darin befindliche Kühlwasser nach einiger Zeit die Temperatur des Dampfes an, der die Außenseite des Rohres umströmt, und nach erneutem Öffnen der Verschlußvorrichtung mißt der Temperatursensor als Temperatur des dem Rohr entströmenden Kühlwassers die Temperatur des außerhalb des Rohres befindlichen Dampfes. Nach einer gewissen Zeit, die von der Diagnoseeinheit zu messen ist, sinkt die Temperatur des dem Rohr entströmenden Kühlwassers wieder auf die normale Austrittstemperatur ab. Die gemessene Zeitdauer ist ein Maß für die Strömungsgeschwindigkeit des Kühlwassers in dem Rohr, so daß zusammen mit der von einem weiteren Temperatursensor bestimmten Temperatur des Kühlwassers beim Eintritt in das Rohr alle Daten zur Verfügung stehen, die zur Berechnung des (weitgehend betriebsunabhängigen) Wärmedurchgangskoeffizienten erforderlich sind. Eine Rohrreinigung ist dann zu veranlassen, wenn der Wärmedurchgangskoeffizient unter einen vorzugebenden Grenzwert absinkt. Zur Veranlassung der Rohrreinigung sollen die Wärmedurchgangskoeffizienten aller ausgewählten Rohre bestimmt werden, wobei die Rohrreinigung bereits dann vorzunehmen ist, wenn ein einziger Wärmedurchgangskoeffizient den vorgegebenen Grenzwert unterschreitet.

Ausführungen zur Betriebsüberwachung eines Kondensators ergeben sich auch aus dem Bericht "Tube Bundle Design and Performance Experience in Large Units" von A. Drosdziok, W. Engelke und J. Plotz, EPRI Symposium on Condenser Technology, 7. bis 9. Juni 1983, Orlando, Florida (USA) sowie dem Bericht "Functional and Thermodynamic Control of Steam Turbine Condensers and their Peripheral Systems" von W. Zörner und A. Drosdziok, ASME Paper 88-JPGC/Pwr-23. Beide Berichte weisen auch auf eine Quelle für Betriebsstörungen des Kondensators hin, die der Rohrverschmutzung an Bedeutung gleichkommt, nämlich das Eindringen von Inertgasen, insbesondere Luft, in das Dampfsystem. Inertgase können unter Umständen den Kontakt des Dampfes mit den Rohren erschweren und so die Leistung des Kondensators herabsetzen.

Die JP-A-61 246 590 betrifft eine Ausgestaltung der in der DE 37 05 240 Al dargestellten Vorrichtung zur Überwachung eines Kondensators, bei der die Messung der Dampftemperatur für jedes ausgewählte Rohr, dessen Wärmedurchgangskoeffizient zu bestimmen ist, an anderen Rohren in der unmittelbaren Nachbarschaft des ausgewählten Rohrs, die durch Stopfen verschlossen sind und in denen sich Temperaturmeßeinrichtungen befinden, erfolgt. Jedem ausgewählten Rohr ist ein Durchflußmeßgerät zur Bestimmung des Massendurchsatzes des durchfließenden Kühlmittels zugeordnet. Die Bestimmung des Wärmedurchgangskoeffizienten für jedes ausgewählte Rohr erfolgt durch Auswertung der an diesem ausgewählten Rohr beziehungsweise für dieses ausgewählte Rohr erhaltenen Meßwerte.

Das US-Patent 4,488,516 betrifft eine Einrichtung zur Entfernung von Aschenablagerungen und dergleichen von den Wänden einer Brennkammer, die insbesondere zu einem Dampfkessel gehören kann. Die Einrichtung umfaßt eine Vielzahl von Gebläsen, deren jedes durch Aufblasen von Luft, Wasser oder Dampf Ablagerungen von einem Teil der Wand der Brennkammer entfernen kann. In der Nähe jedes Gebläses ist eine zugehörige Temperaturmeßeinrichtung oder Wärmeflußeinrichtung installiert, durch welche der Verschmutzungsgrad der Wand in der Umgebung des Gebläses bestimmt wird; erreicht der Verschmutzungsgrad eine gewisse Grenze, so wird das Gebläse aktiviert.

Mit der Erfindung soll eine Möglichkeit zur Überwachung eines Kondensators angegeben werden, mit der sowohl Daten, die die Funktion des Kondensators integral beschreiben und zur Diagnose der Kraftwerksanlage in ihrer Gesamtheit notwendig sind, als auch Daten, die den Kondensator "im kleinen", z. B. einzelne Rohre oder kleine Gruppen von Rohren im Kondensator, beschreiben, einbezogen werden. Auf diese Weise soll, entgegen dem Stand der Technik, eine wirkliche "Gesamt-Diagnose" des Kondensators im Hinblick auf sämtliche möglichen Beeinträchtigungen erzielt werden. Dabei soll auf komplizierte Zusatzeinrichtungen zur Ertüchtigung des Kondensators verzichtet werden können, und die Überwachung soll mit einfachsten und dementsprechend besonders robusten Mitteln, die nach Möglichkeit auch bei allfälligen Revisionen des Kondensators zugänglich, montierbar und demontierbar sein sollen, erfolgen.

Gemäß der Erfindung wird ein Verfahren zur Betriebsüberwachung eines Kondensators mit einem Dampfraum, der von zu kondensierendem Dampf durchströmt wird, und mindestens einer in dem Dampfraum befindlichen Anordnung mit einer Vielzahl von Rohren, deren jedes von einem Eintrittsende zu einem Austrittsende von einem Kühlfluid durchströmt wird, wobei die Vielzahl von Rohren eine Mehrzahl von ausgewählten Rohren umfaßt, vorgeschlagen, bei dem für jedes ausgewählte Rohr
a) die Eintrittstemperatur des Kühlfluides am Eintrittsende, die Austrittstemperatur des Kühlfluides am Austrittsende, die Temperatur des das ausgewählte Rohr unmittelbar umströmenden Dampfes sowie der Massendurchsatz des das ausgewählte Rohr durchströmenden Kühlfluides gemessen werden;
b) der Wärmedurchgangskoeffezient aus dem Produkt aus dem Massendurchsatz und einem Logarithmus des Quotienten aus den Differenzen der Umgebungstemperatur und der Eintrittstemperatur beziehungsweise der Umgebungstemperatur und der Austrittstemperatur bestimmt wird;
   wonach die Wärmedurchgangskoeffizienten aller ausgewählten Rohre mit einem Sollwert verglichen werden und eine Meldung abgegeben wird, falls zumindest ein Wärmedurchgangskoeffizient von dem Sollwert wesentlich abweicht und das dadurch gekennzeichnet ist, daß
c) an zumindest einer Meßstelle in dem Dampfraum der Dampfdruck und/oder die Dampftemperatur des Dampfes gemessen wird;
d) für jedes ausgewählte Rohr die Temperatur des dieses unmittelbar umströmenden Dampfes berechnet wird aus dem Dampfdruck beziehungsweise der Dampftemperatur sowie einer vorher ermittelten Form der Verteilung von Druck und/oder Temperatur in dem Dampfraum.

Zur Durchführung des Verfahrens ist ein zu überwachender Kondensator lediglich mit einfachsten Mitteln für Druck- und Temperaturmessungen auszustatten. Es entfallen aufwendige mechanische Komponenten, und es können - bis auf eine Dampfdruck- oder Dampftemperaturmeßeinrichtung - Meßeinrichtungen in dem Dampfraum entfallen. Dies ist bescnders wertvoll, da zwischen den Rohren im Dampfraum angeordnete Meßeinrichtungen nach dem Aufbau des Kondensators u. U. nur schwer zugänglich sind und somit kaum inspiziert und, falls notwendig, ausgetauscht werden können. Die Erfindung gestattet weitgehend die Beschränkung auf Meßeinrichtungen, die an den Eintrittsenden und an den Austrittsenden der Rohre, die in der Regel in leicht zugängliche Vorlauf- bzw. Ablaufkammern münden, angebracht werden können. Die einzige im Dampfraum nötige Meßeinrichtung kann an einer weitgehend frei wählbaren Meßstelle, insb. an einer leicht zugänslichen und/oder durch günstige physikalische Bedingungen ausgezeichneten Meßstelle, angebracht werden. Die Erfindung erlaubt die Realisierung eines besonders einfachen und besonders robusten Diagnosesystems in Verbindung mit einem gleichermaßen einfachen Diagnoseverfahren, was den bei Kraftwerksanlagen allgemein geltenden, auf optimale Arbeitsausnutzung und größtmögliche Betriebssicherheit gerichteten Konstruktionsgrundsätzen in besonderer Weise gerecht wird. Es versteht sich, daß im Rahmen der Erfindung die Diagnose auch auf Hilfseinrichtungen des Kondensators, z. B. das Vakuumsystem, durch das Versehen entsprechender Sensoren ausgedehnt werden kann.

Die Erfindung fußt auf der Erkenntnis, daß Druck und Temperatur im Dampfraum eines Kondensators einerseits durch die Geometrie des Kondensators und andererseits durch die aufgrund des speziellen thermodynamischen Zustandes des Dampfes in dem Kondensator - Sattdampf - eindeutige Beziehung zwischen Druck und Temperatur festgelegt sind. Die Verteilung von Druck und Temperatur im Dampfraum ist bereits durch eine Druck- oder Temperaturmessung an einer einzigen Meßstelle im Dampfraum eindeutig bestimmbar, nachdem einmal theoretisch oder experimentell in einem speziellen Fall die Form der Verteilung von Druck oder Temperatur ermittelt wurde. Zur Ermittlung dieser Verteilung kann die Strömung des kondensierenden Dampfes durch die Anordnung der Rohre berechnet werden, ggf. unter Berücksichtigung experimentell gewonnener Informationen. Die Inhomogenität der Verteilung ist in erster Linie durch den Einfluß der Druckverluste zu erklären, die die Dampfströmung an den Rohren erleidet. Dies ist z. B. in dem bereits erwähnten Bericht "Tube Bundle Design..." von Drosdziok, Engelke und Plotz erläutert. Die Schwankungen von Druck und Temperatur im Dampfraum bei üblichen Kondensatoren liegen in einem Band von höchstens etwa 20 % Breite. Mittels einer einzigen Druck- oder Temperaturmessung in dem Dampfraum, vorteilhafterweise an einer Meßstelle abseits der Anordnung der Rohre, können somit für jedes ausgewählte Rohr der Differenzdruck und die Umgebungstemperatur, nämlich die Temperatur des das ausgewählte Rohr unmittelbar umströmenden Dampfes, ermittelt werden.

Die Erfindung macht weiterhin vorteilhaften Gebrauch von den bekannten, einfachen und sicheren Möglichkeiten zur Bestimmung des Massendurchsatzes des ein ausgewähltes Rohr durchströmenden Kühlfluides. Die Bestimmung des Massendurchsatzes kann besonders einfach durch Druckmessungen an den Eintrittsenden und den Austrittsenden der ausgewählten Rohre erfolgen, da der Massendurchsatz der Druckdifferenz zwischen Eintrittsende und Austrittsende im wesentlichen proportional ist. Auch können u. U. induktive Durchflußmeßgeräte eingesetzt werden, da üblicherweise in dem Kondensator einer Kraftwerksanlage als Kühlfluid ein im wesentlichen nicht aufbereitetes und somit elektrisch leitfähiges Wasser aus einer entsprechend reichlichen natürlichen Ressource eingesetzt wird.

Die Bestimmung des Wärmedurchgangskoeffizienten eines ausgewählten Rohres erfordert die Bildung eines Logarithmus des Quotienten zweier Temperaturdifferenzen. Dies stellt kein Problem dar und kann sowohl mit bekannten Analog-Logarithmierern als auch nach Digitalisierung der Meßwerte für die Temperaturen oder des Quotienten auf einer digitalen Rechenanlage erfolgen. Grundsätzlich ist es nicht erforderlich, Meßwerte und daraus abgeleitete Werte so aufzubereiten, daß sie als Zahlenwerte für übliche Einheiten vorliegen. Im Allgemeinen ist es ausreichend, die im Rahmen des Diagnoseverfahrens notwendige arithmetische Aufbereitung mit Größen durchzuführen, die den Temperaturen, Drucken usw. proportional sind. Dennoch ist es vorteilhaft, zur Vermeidung evtl. Komplikationen als Logarithmus den natürlichen Logarithmus zu verwenden, wie er sich aus den physikalischen Grundlagen des Verfahrens ergibt.

Günstig ist es weiterhin, zur Analyse der bei der Überwachung erhaltenen Meßdaten für jedes ausgewählte Rohr die Wärmeleistung des das ausgewählte Rohr durchströmenden Kühlfluides zu bestimmen, da diese Größe zu einer Darstellung der thermodynamischen Verhältnisse im Inneren des Kondensators besonders geeignet ist. Zusätzlich kann die "mittlere logarithmische Temperaturdifferenz", der Quotient der Differenz von Austrittstemperatur und Eintrittstemperatur und des erwähnten Logarithmus, als ein vorteilhaftes Maß für den Wärmeübergang ermittelt werden. Der Wärmedurchgangskoeffizient ergibt sich in diesem Falle als eine Zahl, die dem Quotient von Wärmeleistung und mittlerer logarithmischer Temperaturdifferenz proportional ist.

In besonders günstiger Ausgestaltung wird an einem Kondensator, der eine Vorlaufkammer aufweist, in die alle Rohre mit ihren Eintrittsenden münden, zur Bestimmung der Eintrittstemperaturen aller ausgewählten Rohre eine einzige Meßstelle in der Vorlaufkammer vorgesehen. Dies ist für die Zwecke des Verfahrens vollkommen ausreichend, da meistens vor den durch den Dampfraum erstreckten Rohren keine verteilten Wärmequellen zur lokalen Aufheizung des Kühlwassers vorhanden sind und somit generell davon ausgegangen werden kann, daß alle Rohre mit Kühlwasser derselben Temperatur beaufschlagt werden.

Im Hinblick auf die Angabe einer Vorrichtung, welche die Durchführung des Verfahrens ermöglicht, wird eine Vorrichtung angegeben, welche aufweist:
a) an zumindest einer Meßstelle in dem Dampfraum Mittel zur Messung des Dampfdrucks und/oder der Dampftemperatur, insbesondere einen Dampfdrucksensor oder einen Dampftemperatursensor;
b) für jedes ausgewählte Rohr einen Eintrittstemperatursensor an dem Eintrittsende, einen Austrittstemperatursensor an dem Austrittsende sowie Mittel zur Messung des Massendurchsatzes, insbesondere einen induktiven Durchflußmesser oder eine Kombination aus einem Eintrittsdrucksensor am Eintrittsende und einem Austrittsdrucksensor am Austrittsende;
c) eine Diagnoseeinrichtung, die mit den Mitteln zur Bestimmung der Dampftemperatur beziehungsweise des Dampfdrucks, den Eintrittstemperatursensoren, den Austrittstemperatursensoren sowie den Mitteln zur Messung des Massendurchsatzes verbunden ist und durch die aus der Dampftemperatur beziehungsweise aus dem Dampfdruck für jedes ausgewählte Rohr die Temperatur des dieses unmittelbar umströmenden Dampfes bestimmbar ist.

In besonderer Ausgestaltung sind die ausgewählten Rohre im wesentlichen gleichmäßig über die Anordnung mit einer Vielzahl von Rohren verteilt.

Darüber hinaus ist es vorteilhaft, die Meßstelle zur Bestimmung von Dampftemperatur und/oder Dampfdruck abseits der Anordnung mit den Rohren, vorzugsweise oberhalb dieser Anordnung, vorzusehen. Solcherart ist die Meßstelle leicht erreichbar, und vor allem ist eine besonders sichere Aussage über die Dampfströmung an einer solchen Meßstelle möglich. Schließlich besteht an einer oberhalb der Rohre gelegenen Meßstelle kaum eine Möglichkeit, daß die Meßwertaufnehmer durch Ablagerungen o. dgl. beeinträchtigt werden.

Die weitere Erläuterung der Erfindung erfolgt anhand der in der Zeichnung dargestellten Ausführungsbeispiele;
im einzelnen zeigen:
Fig. 1 einen für die Betriebsüberwachung ertüchtigten Kondensator;
Fig. 2 ein Beispiel, wie die Rohre des Kondensators mit Sensoren auszustatten sind.

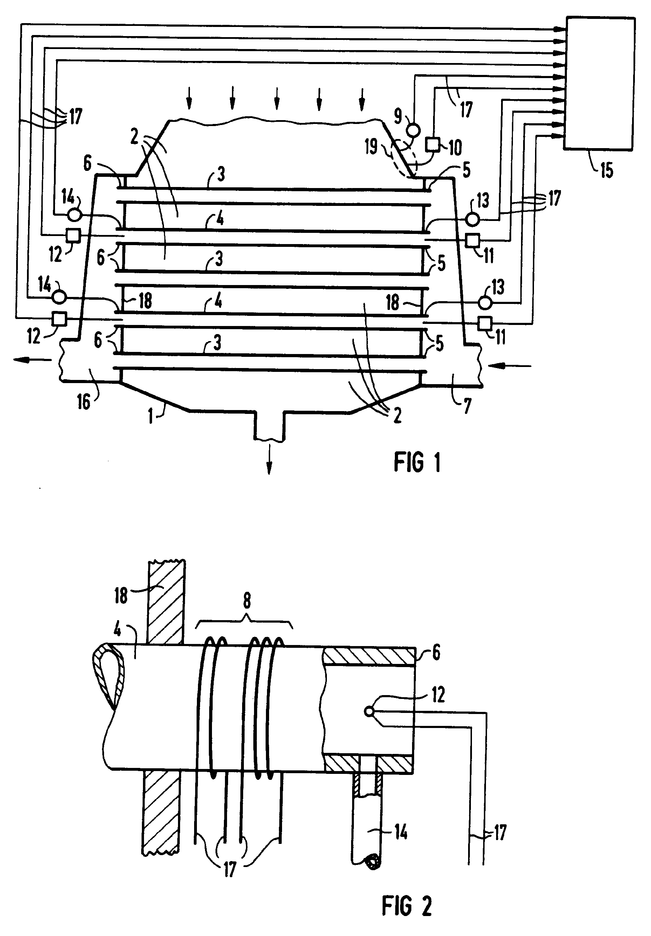

Fig. 1 zeigt einen stark vereinfachten und schematisierten Querschnitt durch einen Kondensator 1, in dessen Innerem ein Dampfraum 2 vorgesehen ist, in den der zu kondensierende Dampf von der Oberseite her einströmt. Der Dampf umströmt eine Anordnung von Rohren 3, 4, die sich durch den Dampfraum 2 erstrecken und von einem Kühlfluid, insbesondere von Kühlwasser, durchflossen sind. Der Dampf kondensiert an den Rohren 3, 4, und das entstehende flüssige Kondensat sammelt sich im unteren Bereich des Kondensators 1 und wird dort abgezogen. Die Anordnung der Rohre 3, 4 umfaßt eine Anzahl ausgewählter Rohre 4, die zu den Zwecken der Erfindung mit Sensoren 11, 12, 13, 14 bestückt sind. Die Rohre 3, 4 sind in Rohrböden 18 eingelassen, wobei diese Rohrböden 18 gleichzeitig eine Vorlaufkammer 7, der das Kühlfluid zugestellt wird, bzw. eine Ablaufkammer 16, aus der das Kühlfluid wieder abgezogen wird, von dem Dampfraum 2 trennen. Die Rohre 3, 4 ragen mit Eintrittsenden 5 in die Vorlaufkammer 7 sowie mit Austrittsenden 6 in die Ablaufkammer 16. Das Kühlfluid strömt aus der Vorlaufkammer 7 in die Eintrittsenden 5, durchströmt die Rohre 3, 4 und tritt schließlich aus den Austrittsenden 6 in die Ablaufkammer 16 aus, von wo es mit allseits bekannten und hier nicht dargestellten Mitteln abgepumpt wird. Ggf. können dem Kühlfluid vor oder in der Vorlaufkammer 7 Reinigungskörper beigegeben werden, mit denen die Innenseiten der Rohre 3, 4 gereinigt werden.

Diese Reinigungskörper sind in oder hinter der Ablaufkammer 16 wieder aus dem Kühlfluid zu entfernen. Der Dampfraum 2 ist an einer Meßstelle 19 oberhalb der Rohre 3, 4 mit einem Dampfdrucksensor 9 sowie einem Dampftemperatursensor 10 versehen. In der Regel ist nur einer dieser Sensoren 9, 10 erforderlich, da aufgrund des speziellen thermodynamischen Zustandes des Dampfes in dem Kondensator 1 zwischen Dampfdruck und Dampftemperatur eine eindeutige Beziehung besteht. Weiterhin sind die Eintrittsenden 5 der ausgewählten Rohre 4 mit Eintrittstemperatursensoren 11 und Eintrittsdrucksensoren 13 ausgestattet. Gleichermaßen weisen die ausgewählten Rohre 4 an ihren Austrittsenden 6 Austrittstemperatursensoren 12 und Austrittsdrucksensoren 14 auf. Die Temperatursensoren 11, 12 dienen in Verbindung mit den Dampftemperatursensor 10 der Bestimmung der Wärmemengen, die von dem die ausgewählten Rohre 4 durchströmenden Kühlfluid dem Dampf im Dampfraum 2 entnommen werden, und damit der Wärmeleistung jedes ausgewählten Rohres 4.
Die Drucksensoren 13, 14 dienen der Bestimmung des Massendurchsatzes an Kühlfluid durch die ausgewählten Rohre 4 - sie können ggf. durch andere Sensoren ersetzt werden. Besondere Ausführungen zur Gestaltung der Drucksensoren 9, 13 und 14 sowie der Temperatursensoren 10, 11 und 12 erübrigen sich, da derartige Sensoren in großer Vielfalt allgemein bekannt sind und verwendet werden. Alle Sensoren 9, 10, 11, 12, 13 und 14 weisen Verbindungsleitungen 17 zu einer Diagnoseeinrichtung 15 auf. Diese Diagnoseeinrichtung 15 ist üblicherweise ein elektronisches Gerät in Digital- oder Analogtechnik oder eine Kombination aus digitalen und analogen Komponenten. Da entsprechende Komponenten in großer Vielfalt bekannt sind, auch und insbesondere aus dem zitierten Stand der Technik, kann auf weitere Ausführungen zur Gestaltung und Funktion der Diagnoseeinrichtung 15 verzichtet werden.

Fig. 2 zeigt Möglichkeiten, ein ausgewähltes Rohr 4 mit Sensoren zu versehen. Das Austrittsende 6 des ausgewählten Rohres 4 ragt aus einem Rohrboden 18, in dem das ausgewählte Rohr 4 befestigt ist. Im Bereich des Austrittsendes 6 ist ein Austrittstemperatursensor 12 in Form eines Thermoelementes angeordnet. Weiterhin ist ein Austrittsdrucksensor 14 vorgesehen, von dem hier nur ein zu einem Manometer o. dgl. führendes Rohrstück zu sehen ist. Weiterhin ist das ausgewählte Rohr 4 im Bereich des Austrittsendes 6 mit einem induktiven Durchflußmesser 8 in Form zweier nebeneinander um das ausgewählte Rohr 4 gewickelten Spulen dargestellt. Der induktive Durchflußmesser 8 und der Austrittstemperatursensor 12 weisen Verbindungsleitungen 17 auf, die an entsprechende, an sich bekannte elektronische Bediengeräte anzuschließen sind.

Die vorliegende Erfindung ermöglicht eine Betriebsüberwachung eines Rohre aufweisenden Kondensators mit Messungen an ausgewählten Rohren, wobei für die Messungen lediglich beliebig verfügbare, einfache und bei allfälligen Revisionen leicht inspizierbare und auswechselbare Sensoren eingesetzt werden. Die erfindungsgemäße Betriebsüberwachung fügt sich ohne weiteres in ein Diagnosesystem für eine vollständige Kraftwerksanlage ein und gestattet die Überwachung sämtlicher Parameter, die zur Charakterisierung des Betriebszustandes des überwachten Kondensators erforderlich sind.

## Patentansprüche

1. Verfahren zur Betriebsüberwachung eines Kondensators (1) mit einem Dampfraum (2), der von zu kondensierendem Dampf durchströmt wird, und mindestens einer in dem Dampfraum (2) befindlichen Anordnung mit einer Vielzahl von Rohren (3, 4), deren jedes von einem Eintrittsende (5) zu einem Austrittsende (6) von einem Kühlfluid durchströmt wird, wobei die Vielzahl von Rohren (3, 4) eine Mehrzahl von ausgewählten Rohren (4) umfaßt, bei dem für jedes ausgewählte Rohr
a) die Eintrittstemperatur des Kühlfluides am Eintrittsende (5), die Austrittstemperatur des Kühlfluides am Austrittsende (6), die Temperatur des das ausgewählte Rohr (4) unmittelbar umströmenden Dampfes sowie der Massendurchsatz des das ausgewählte Rohr (4) durchströmenden Kühlfluides gemessen werden;
b) der Wärmedurchgangskoeffizient aus dem Produkt aus dem Massendurchsatz und einem Logarithmus des Quotienten aus den Differenzen der Umgebungstemperatur und der Eintrittstemperatur beziehungsweise der Umgebungstemperatur und der Austrittstemperatur bestimmt wird;
wonach die Wärmedurchgangskoeffizienten aller ausgewählten Rohre (4) mit einem Sollwert verglichen werden und eine Meldung abgegeben wird, falls zumindest ein Wärmedurchgangskoeffizient von dem Sollwert wesentlich abweicht,
**dadurch gekennzeichnet**, daß
c) an zumindest einer Meßstelle (19) in dem Dampfraum (2) der Dampfdruck und/oder die Dampftemperatur des Dampfes gemessen wird;
d) für jedes ausgewählte Rohr (4) die Temperatur des dieses unmittelbar umströmenden Dampfes berechnet wird aus dem Dampfdruck beziehungsweise der Dampftemperatur sowie einer vorher ermittelten Form der Verteilung von Druck und/oder Temperatur in dem Dampfraum (2).

2. Verfahren nach Anspruch 1, wobei der Logarithmus der natürliche Logarithmus ist.

3. Verfahren nach Anspruch 2, wobei
a) für jedes ausgewählte Rohr (4) die Wärmeleistung des das ausgewählte Rohr (4) durchströmenden Kühlfluides aus dem Produkt aus dem Massendurchsatz und der Differenz von Austrittstemperatur und Eintrittstemperatur bestimmt wird;
b) für jedes ausgewählte Rohr (4) eine mittlere logarithmische Temperaturdifferenz als Quotient der Differenz von Austrittstemperatur und Eintrittstemperatur und des Logarithmus bestimmt wird;
c) der Wärmedurchgangskoeffizient aus dem Quotient von Wärmeleistung und mittlerer logarithmischer Temperaturdifferenz berechnet wird.

4. Verfahren nach einem der vorhergehenden Ansprüche, wobei alle Eintrittsenden (5) in eine Vorlaufkammer (7) münden und für alle ausgewählten Rohre (4) die Eintrittstemperaturen gemeinsam an einer Meßstelle in der Vorlaufkammer (7) bestimmt werden.

5. Verfahren nach einem der vorhergehenden Ansprüche, wobei
a) für jedes ausgewählte Rohr (4) der Eintrittsdruck des Kühlfluides am Eintrittsende (5) und der Austrittsdruck des Kühlfluides am Austrittsende (6) gemessen werden;
b) für jedes ausgewählte Rohr (4) der Massendurchsatz aus der Differenz von Eintrittsdruck und Austrittsdruck bestimmt wird.

6. Verfahren nach einem der Ansprüche 1 bis 4, wobei
a) das Kühlfluid eine elektrisch leitfähige Flüssigkeit ist, insbesondere Wasser, in dem Spuren von Mineralstoffen gelöst sind;
b) für jedes ausgewählte Rohr (4) der Massendurchsatz mittels eines induktiven Durchflußmessers (8) gemessen wird.

7. Vorrichtung zur Durchführung des Verfahrens nach einem der Ansprüche 1 bis 6, welche aufweist:
a) an zumindest einer Meßstelle (19) in dem Dampfraum (2) Mittel (9; 10) zur Messung des Dampfdrucks und/oder der Dampftemperatur, insbesondere einen Dampfdrucksensor (9) oder einen Dampftemperatursensor (10);
b) für jedes ausgewählte Rohr (4) einen Eintrittstemperatursensor (11) an dem Eintrittsende (5), einen Austrittstemperatursensor (12) an dem Austrittsende (6) sowie Mittel (8; 13;14) zur Messung des Massendurchsatzes, insbesondere einen induktiven Durchflußmesser (8) oder eine Kombination aus einem Eintrittsdrucksensor (13) am Eintrittsende (5) und einem Austrittsdrucksensor (14) am Austrittsende (6);
c) eine Diagnoseeinrichtung (15), die mit den Mitteln (9; 10) zur Bestimmung der Dampftemperatur beziehungsweise des Dampfdrucks, dem Eintrittstemperatursensor (11), dem Austrittstemperatursensor (12) sowie den Mitteln (8; 13; 14) zur Messung des Massendurchsatzes verbunden ist und durch die aus der Dampftemperatur beziehungsweise dem Dampfdruck für jedes ausgewählte Rohr (4) die Temperatur des dieses unmittelbar umströmenden Dampfes bestimmbar ist.

8. Vorrichtung nach Anspruch 7, bei der die ausgewählten Rohre (4) im wesentlichen gleichmäßig über die Anordnung mit der Vielzahl von Rohren (3, 4) verteilt sind.

9. Vorrichtung nach Anspruch 7 oder 8, bei der die Meßstelle (19) abseits der Anordnung mit den Rohren (3, 4), insbesondere oberhalb der Anordnung mit den Rohren (3, 4), liegt.

## Claims

1. Method for operational monitoring of a condenser (1) with a steam chamber (2), through which steam to be condensed flows, and with at least one arrangement located in the steam chamber (2) having a plurality of tubes (3,4), each tube of which has coolant fluid flowing through it from an inlet end (5) to an outlet end (6), wherein the plurality of tubes (3,4) has a multiplicity of selected tubes (4), in which
a) the inlet temperature of the coolant fluid at the inlet end (5), the outlet temperature of the coolant fluid at the outlet end (6), the temperature of the steam immediately flowing around the selected tube (4) and the mass throughput of the coolant fluid flowing through the selected tube (4), is measured for each selected tube;
b) the heat transfer coefficient is determined from the product of the mass throughput and a logarithm of the quotient from the differences between the ambient temperature and the inlet temperature or between the ambient temperature and the outlet temperature, for each selected tube;
after which the heat transfer coefficients of all of the selected tubes (4) are compared with a set-point value and a warning issued if at least one heat transfer coefficient deviates substantially from the set-point value, characterised in that
c) the steam pressure and/or the steam temperature of the steam is measured at least at one measuring point (19) in the steam chamber (2);
d) the temperature of the steam immediately flowing around each selected tube (4) is calculated for this respective tube from the steam pressure or the steam temperature as well as a previously ascertained form of the distribution of pressure and/or the temperature in the steam chamber (2).

2. Method according to claim 1, wherein the logarithm is the natural logarithm.

3. Method according to claim 2, wherein
a) the heat output of the coolant fluid flowing through the selected tube (4) from the product of the mass throughput and the difference between the outlet temperature and the inlet temperature is determined for each selected tube (4):
b) a mean logarithmic temperature difference as a quotient of the difference between the outlet temperature and the inlet temperature and of the logarithm is determined for each selected tube (4);
c) the heat transfer coefficient is calculated from the quotient of the heat output and a mean logarithmic temperature difference.

4. Method according to one of the preceding claims, wherein all inlet ends (5) open into an inflow chamber (7) and the inlet temperatures for all of the selected tubes (4) are determined in common at one measuring point in the inflow chamber (7).

5. Method according to one of the preceding claims, wherein:
a) the inlet pressure of the coolant fluid at the inlet end (5) and the outlet pressure of the coolant fluid at the outlet end (6) are measured for each selected tube (4);
b) the mass throughput for each selected tube (4) is determined from the difference between the inlet pressure and the outlet pressure.

6. Method according to one of claims 1 to 4, wherein
a) the coolant fluid is an electrically conductive liquid, in particular water in which traces of minerals are dissolved;
b) the mass throughput for each selected tube (4) is measured by means of an inductive flowmeter (8).

7. Device for carrying out the method according to one of claims 1 to 6, which comprises:
a) means (9;10) at least at one measuring point (19) in the steam chamber (2) for measuring the steam pressure and/or the steam temperature, in particular a steam pressure sensor (9) or a steam temperature sensor (10);
b) for each selected tube (4) an inlet temperature sensor (11) at the inlet end (5), an outlet temperature sensor (12) at the outlet end (6), and means (8; 13; 14) for measuring mass throughput, in particular an inductive flowmeter (8) or a combination of an inlet pressure sensor (13) at the inlet end (5) and an outlet pressure sensor (14) at the outlet end (6);
c) a diagnostic device (15) which is connected to the means (9; 10) for determining the steam temperature or the steam pressure, to the inlet temperature sensor (11), to the outlet temperature sensor (12) and to the means (8: 13; 14) for measuring the mass throughput, and through which the temperature of the steam immediately flowing around each selected tube (4) is determined from the steam temperature or the steam pressure for each selected tube (4).

8. Device according to claim 7, in which the selected tubes (4) are distributed substantially uniformly over the arrangement with the plurality of tubes (3,4).

9. Device according to claim 7 or 8, in which the measuring point (19) lies apart from the arrangement with the tubes (3,4) in particular above the arrangement with the tubes (3,4).

## Revendications

1. Procédé pour contrôler le fonctionnement d'un condenseur (1) comportant une chambre à vapeur (2), qui est traversée par une vapeur à condenser, et au moins un dispositif situé dans la chambre à vapeur (2) et comprenant une multiplicité de tubes (3, 4), dont chacun est parcouru depuis l'extrémité d'entrée (5) jusqu'à une extrémité de sortie (6), par un fluide de refroidissement, et dans lequel la multiplicité de tubes (3, 4) comprend une multiplicité de tubes sélectionnés (4), et selon lequel, pour chaque tube sélectionné,
a) on mesure la température d'entrée du fluide de refroidissement à l'extrémité d'entrée (5), la température de sortie du fluide de refroidissement à l'extrémité de sortie (6), la température de la vapeur circulant directement autour du tube (4) sélectionné ainsi que le débit massique du fluide de refroidissement circulant dans le tube (4) sélectionné;
b) on détermine le coefficient de transfert thermique à partir du produit du débit massique par un logarithme du quotient entre la différence entre la température ambiante et la température d'entrée et la différence entre la température ambiante et la température de sortie;
les coefficients de transfert thermique de tous les tubes (4) sélectionnés étant comparés à une valeur de consigne et une signalisation étant délivrée dans le cas où au moins un coefficient de transfert thermique s'écarte fortement de la valeur de consigne,
caractérisé par le fait
c) qu'on mesure la pression de vapeur et/ou la température de la vapeur en au moins un emplacement de mesure (19) dans la chambre à vapeur (2);
d) que pour chaque tube (4) sélectionné, on calcule la température de cette vapeur circulant directement autour du tube, à partir de la pression de vapeur ou de la température de la vapeur ainsi que d'une forme, déterminée auparavant, de la distribution de la pression et/ou de la température dans la chambre à vapeur (2).

2. Procédé selon la revendication 1, selon lequel le logarithme est le logarithme naturel.

3. Procédé suivant la revendication 2, selon lequel
a) pour chaque tube (4) sélectionné, on détermine la puissance thermique du fluide de refroidissement qui traverse le tube (4) sélectionné, à partir du produit du débit massique par la différence entre la température de sortie et la température d'entrée;
b) pour chaque tube (4) sélectionné, on détermine une différence de température logarithmique moyenne en tant que quotient entre la différence entre la température de sortie et la température d'entrée, et le logarithme;
c) on calcule le coefficient de transfert thermique à partir du quotient entre la puissance thermique et la différence de température logarithmique moyenne.

4. Procédé suivant l'une des revendications précédentes, selon lequel toutes les extrémités d'entrée (5) débouchent dans une chambre amont (7) et, pour tous les tubes (4) sélectionnés, on détermine les températures d'entrée en commun en un point de mesure dans la chambre amont (7).

5. Procédé suivant l'une des revendications précédentes, selon lequel
a) pour chaque tube (4) sélectionné, on mesure la pression d'entrée du fluide de refroidissement à l'extrémité d'entrée (5) et la pression de sortie du fluide de refroidissement à l'extrémité de sortie (6);
b) pour chaque tube (4) sélectionné, on détermine le débit massique à partir de la différence entre la pression d'entrée et la pression de sortie.

6. Procédé suivant l'une des revendications 1 à 4, selon lequel
a) le liquide de refroidissement est un liquide électriquement conducteur, notamment de l'eau, dans lequel sont dissoutes des traces de substances minérales;
b) pour chaque tube (4) sélectionné, on mesure le débit massique à l'aide d'un débitmètre inductif (8).

7. Dispositif pour la mise en oeuvre du procédé selon l'une des revendications 1 à 6, qui comprend :
a) en au moins un emplacement de mesure (19) dans la chambre à vapeur (2), des moyens (9; 10) pour mesurer la pression de vapeur et/ou la température de la vapeur, notamment un capteur (9) de la pression de vapeur ou un capteur (10) de la température de la vapeur;
b) pour chaque tube (4) sélectionné, un capteur (11) de la température d'entrée, qui est présent à l'extrémité d'entrée (5), un capteur (12) de la température de sortie, qui est présent à l'extrémité de sortie (6), ainsi que des moyens (8; 13; 14) pour mesurer le débit massique, notamment un débitmètre inductif (8) ou un ensemble combiné formé d'un capteur (13) de la pression d'entrée, situé à l'extrémité d'entrée (5), et un capteur (14) de la pression de sortie, situé à l'extrémité de sortie (6);
c) un dispositif de diagnostic (15), qui est relié aux moyens (9; 10) servant à déterminer la température de la vapeur et la pression de vapeur, au capteur (11) de la température d'entrée, au capteur (12) de la température de sortie ainsi qu'aux moyens (8; 13; 14) servant à mesurer le débit massique, et au moyen duquel peut être déterminée, à partir de la température de la vapeur ou de la pression de vapeur pour chaque tube (4) sélectionné, la température de la vapeur qui circule directement autour de ce tube.

8. Dispositif suivant la revendication 7, dans lequel les tubes (4) sélectionnés sont répartis sensiblement uniformément sur le dispositif constitué par la multiplicité de tubes (3, 4).

9. Dispositif suivant la revendication 7 ou 8, dans lequel le point de mesure (19) est situé à l'écart du dispositif comprenant les tubes (3, 4) et notamment au-dessus du dispositif comprenant les tubes (3, 4).
